# EUROPÄISCHE PATENTSCHRIFT

(11) **EP 1 270 313 B1**
(45) Veröffentlichungstag und Bekanntmachung des Hinweises auf die Patenterteilung: **02.10.2013**
(21) Anmeldenummer: 02450120.7
(22) Anmeldetag: 16.05.2002
(51) Int. Cl.: B60M 1/04, B60L 5/39

(54) **Stromabnehmerabdeckung**
Cover for current collector
Couverture d'un collecteur de courant

(30) Priorität: 28.06.2001 AT 51601 U
(43) Veröffentlichungstag der Anmeldung: 02.01.2003
(73) Patentinhaber: Siemens AG Österreich, 1210 Wien (AT)
(72) Erfinder: Rummig, Thomas, 1140 Wien (AT); Hadolt, Helmut, 1070 Wien (AT); Penz, Peter, 1190 Wien (AT); Leiker, Fritz, 1230 Wien (AT)
(74) Vertreter: Peham, Alois

(56) Entgegenhaltungen:
- JP-A- 63 234 803
- US-A- 3 762 515
- US-A- 3 971 459

## Beschreibung

Die Erfindung betrifft eine Abdeckung für einen an eine Stromschiene anlegbaren Schleifkörper.

Stromabnehmer von Schienenfahrzeugen für Stromschienen - sogenannte "dritte Schienen" - sind in großer Zahl bekannt. Hierbei wird die Stromschiene von einem Schleifkörpern zur Stromabnahme bestrichen.

Aus Sicherheitsgrunden ist es erforderlich, dass bei einem in einer Station stehenden Schienenfahrzeug mit einem Stromabnehmer für eine dritte Schiene kein freiliegendes und von einem Bahnsteig aus erreichbares, spannungsführendes Stück des Schleifkörpers vorhanden bzw. von dem Bahnsteig aus berührbar ist.

Deshalb ist es vorgeschrieben, zwischen Bahnsteigoberkante und Schleifkörper einen "ausreichenden" Abstand zu lassen, sodass der Schleifkörper nicht vom Bahnsteig aus berührt werden kann. Wie sich in der Praxis gezeigt hat bietet die Erfüllung dieser Forderung nur einen mangelhaften Schutz von Personen, da der Abstand zwischen Bahnsteigoberkante und den Schleifkörpern bauartbedingt begrenzt ist und es vorkommen kann, dass dieser Abstand mittels Gegenständen beispielsweise eines Regenschirmes oder Schier, etc., überbrückt werden kann, und es zu einem Kontakt einer Person mit einem spannungsführenden Schleifkörper kommen kann.

Bis jetzt ist noch keine Vorrichtung bekannt, mit der sich ein wirkungsvoller Schutz von Personen hinsichtlich eines spannungsführenden Schleifkörpers eines in einer Station verweilenden Schienenfahrzeuges, welches einen Stromabnehmer für eine dritte Schiene aufweist, erzielen lässt.

Aus der US 3,762,515 ist eine Abdeckung für einen Stromabnehmer bekannt. Diese Abdeckung wird nur dann angebracht, wenn die Energieversorgung des Fahrzeuges nicht über diesen Stromabnehmer, sondern über eine alternative Spannungsquelle erfolgt. Im regulären Betriebsfall, wenn der Stromabnehmer mit der Stromschiene in elektrischem Kontakt steht, ist jedoch keine Abdeckung vorgesehen.

Es ist daher eine Aufgabe der Erfindung eine einfach zu realisierende und effiziente Sicherheitsvorkehrung zu schaffen, die es ermöglicht, die Betriebssicherheit von Schienenfahrzeugen mit einer dritten Schiene hinsichtlich des Schutzes von Personen zu erhöhen.

Diese Aufgabe wird erfindungsgemäß mit einer Abdeckung für zumindest einen an eine Stromschiene anlegbaren Schleifkörper eines an einem Drehgestell eines Schienenfahrzeuges angeordneten Stromabnehmers gelöst, wobei die Abdeckung mit dem Stromabnehmer verbunden ist und zumindest abschnittswelse zwischen dem zumindest einen Schleifkörper und einem dem Schleifkörper gegenüberliegenden seitlichen Langträger des Schienenfahrzeuges verläuft.

Da die Abdeckung mit dem Stromabnehmer verbunden ist, vollzieht sie die Bewegungen des Stromabnehmers mit. Dadurch kann verhindert werden, dass Materialdurchdringungen bzw. Lichtraumverletzungen durch die Abdeckung bei diversen Bewegungen des Zuges und verschiedenen Gleisanlagen entstehen.

Vorteilhafterweise ist die Abdeckung in Richtung des Langträgers hochklappbar. Dadurch ist ein Wegklappen der Abdeckung und eine händische Betätigung des Stromabnehmers möglich. Auch kann durch das Wegklappen des Deckels nach oben eine eventuelle Kollision mit falsch angeordneten Haltepunktstafeln oder anderen Hindernissen ohne Schaden überstanden werden.

Weist der Stromabnehmer eine Seitenabdeckung auf, so besteht eine vorteilhafte Variante der Erfindung darin, dass die Abdeckung an einem oberen, dem Langträger näher liegendem Ende einer Seitenabdeckung des Stromabnehmers drehbar gelagert ist, wobei das obere Ende der Seitenabdeckung einen unteren Anschlag für die Abdeckung aufweisen kann.

Weitere Vorteile lassen sich dadurch erzielen, dass die Abdeckung an ihrem dem Bahnsteig näher liegenden Endbereich breiter ausgebildet ist als an ihrem an dem Seitenabschnitt gelagerten Endbereich.

Ein sehr guter Schutz vor Berührungen des Schleifkörpers durch Personen lässt sich dadurch verwirklichen, dass die Abdeckung so ausgebildet ist, dass sie abschnittsweise über die dem Schienenfahrzeug abgewandte Seitenfront des Langträgers vorragt. Durch diese Maßnahme kann der Spalt zwischen Bahnsteig und Schienenfahrzeug verkleinert werden, sodass eine Berührung des Schleifkörpers weiter erschwert wird.

Um bei einer Kollision mit einem Hindernis leichter nach oben wegklappen, d. h. ausweichen zu können, ist in einer vorteilhaften Ausführungsform der Erfindung die Abdeckung an ihrem vorderen, seitlichen Endbereichen nach oben, in Richtung des Langträgers, aufgebogen.

Die Erfindung samt weiterer Vorteile wird im folgenden anhand einiger nicht einschränkender Ausführungsbeispiele näher erläutert, welche in der Zeichnung schematisch dargestellt sind. In dieser zeigen:
Fig. 1 einen Querschnitt normal zur Schienenebene durch ein Untergestells eines Schienenfahrzeuges mit einem Stromabnehmer und einer erfindungsgemäßen Abdeckung,
Fig. 2 einen Schnitt entlang der Linie II-II in Fig. 1 und
Fig. 3 eine Draufsicht aus der Richtung III in Fig. 1 auf die erfindungsgemäße Abdeckung.

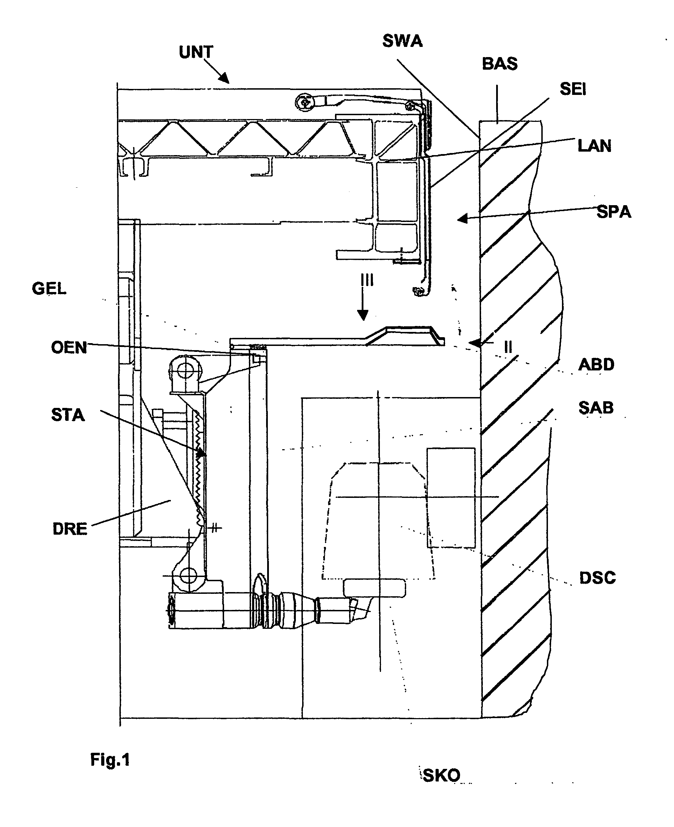

Gemäß Fig. 1 ist eine erfindungsgemäße Abdeckung ABD für einen an eine Stromschiene anlegbaren Schleifkörper SKO eines Stromabnehmers STA an dem Stromabnehmer STA eines Schienenfahrzeuges montiert. Der Stromabnehmer STA vollführt aufgrund seiner Anordnung an einem Drehgestell DRE des Schienenfahrzeuges nur geringe Wankbewegungen und Einfederungen, darüber hinaus wird der Stromabnehmer STA nach Abdrehen der Räder des Drehgestells DRE höhenkorrigiert. Durch die Montage der Abdeckung ABD an dem Stromabnehmer STA vollführt diese die Bewegungen des Stromabnehmers STA mit. Diese Maßnahme ermöglicht es, Materialdurchdringungen zwischen der Abdeckung ABD und dem Stromabnehmer STA bzw. Lichtraumverletzungen bei unterschiedlichen Gleisanlagen und Bewegungen des Schienenfahrzeuges zu vermeiden, wie sie bei Montage der Abdeckung ABD an einer anderen Stelle des Schienenfahrzeuges als an dem Stromabnehmer STA auftreten können.

Da im Stationsbereich bahnsteigseitig keine Stromschienen DSC angeordnet sind liegt der Schleifkörper SKO in diesem Bereich blank. Um ein Berühren des Schleifkörpers SKO, beispielsweise durch einen Regenschirm etc., von einem Bahnsteig BAS aus zu verhindern, verläuft die Abdeckung ABD zumindest abschnittsweise zwischen dem Schleifkörper SKO und einem Langträger LAN eines Untergestells UNT des Schienenfahrzeuges, sodass der Schleifkörper SKO von dem Bahnsteig BAS aus vollständig abgedeckt ist.

In einer bevorzugten Ausführungsform der Erfindung kann die Abdeckung ABD an dem oberen Ende OEN einer Seitenabdeckung SAB des Stromabnehmers STA, die den Stromabnehmer STA zumindest abschnittsweise gegen eine Seitenwand SWA eines Bahnsteiges BAS verdeckt, drehbar gelagert sein. Die Lagerung der Abdeckung ABD kann mittels eines mit der Abdeckung und der Seitenabdeckung SAB verbundenen Gelenkes, beispielsweise mittels eines Scharniers SCA erfolgen.

Die Bewegung der Abdeckung ABD in Richtung des Schleifkörpers SKO kann durch einen unteren Anschlag UAN so begrenzt werden, dass die Längserstreckung LAS der Abdeckung ABD in einer Ruheposition im wesentlichen parallel zur Schienenebene und normal zur Seitenwand SWA des Bahnsteiges BAS verläuft. Da der Schleifkörper SKO von der Abdeckung ABD in der Ruheposition vollständig abgedeckt werden kann, ist in der Ruheposition ein optimaler Berührungsschutz gewährleistet. Die Abdeckung ABD kann im Bedarfsfall aus der Ruheposition nach oben - in Richtung des Langträgers LAN - weggeklappt werden, wodurch eine händische Betätigung des Stromabnehmers STA bzw. des Schleifkörpers SKO mittels eines Stromabnehmerhandhebels erleichtert wird. Darüber hinaus kann eine Kollision mit falsch angeordneten Haltepunktstafeln oder einem anderen Hindernis ohne Schaden für das Schienenfahrzeug bzw. für die Abdeckung ABD überstanden werden, da der Deckel von dem Hindernis nach oben weggedrückt werden kann, d. h. die Abdeckung ABD kann dem Hindernis nach oben in Richtung des Langträgers LAN ausweichen.

In der Ruheposition kann die Abdeckung ABD über die dem Schienenfahrzeug abgewandte Seitenfront SEI des Langträgers LAN bzw. über die Seitenfront des Schienenfahrzeuges in Richtung der Seitenwand SWA des Bahnsteiges hinausragen. Dadurch kann der Spalt SPA zwischen dem Schienenfahrzeug und der Seitenwand SWA des Bahnsteiges BAS wesentlich verringert werden und die Wahrscheinlichkeit, dass es zu einer Berührung des Schleifkörpers SKO kommt weiter minimiert werden.

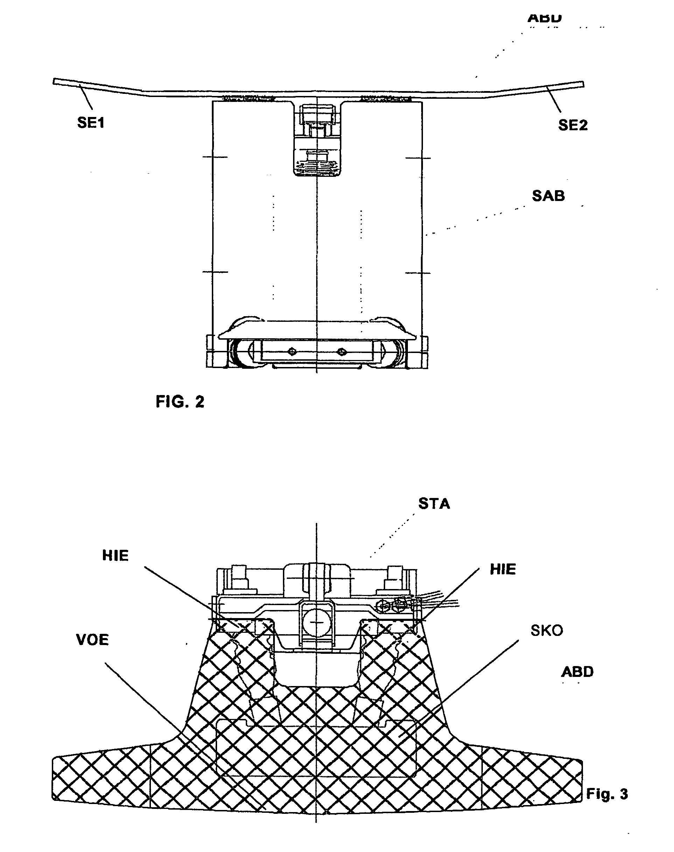

Gemäß Fig. 2 ist die Abdeckung ABD an ihrem vorderen, seitlichen, Endbereichen SE1, SE2 nach oben in Richtung des Langträgers LAN aufgebogen, um bei Kollisionen mit einem Hindernis leichter nach oben - in Richtung des Langträgers LAN - wegklappen zu können, wodurch eine Beschädigung der Abdeckung ABD vermieden werden kann.

Nach Fig. 3 ist die Abdeckung im Bereich ihrer vorderen freien Endes VOE breiter als an seinem mit dem Stromabnehmer STA verbundenen hinteren Endbereich HIE, sodass die Abdeckung den Schleifkörper SKO auch seitlich - in Fahrzeuglängsrichtung - überragt. Auf diese Weise lässt sich die Betriebssicherheit weiter erhöhen und eine Berührung des Schleifkörpers SKO vom Bahnsteig BAS aus verhindern. Um von oben, aus Richtung des Langträgers LAN, auftretende Belastungen gut aufnehmen zu können, können sowohl die Abdeckung ABD als auch die Scharniere SCA versteift sein, wobei die Abdeckung ABD bevorzugterweise aus Kunststoff hergestellt ist.

## Patentansprüche

1. Schutzvorrichtung eines Schienenfahrzeuges mit einer Abdeckung (ABD) des angeordneten Stromabnehmers (STA), **dadurch gekennzeichnet, dass** im regulären Betriebsfall, wenn der Stromabnehmer (STA) mit der Stromschiene in elektrischem Kontakt steht, die Abdeckung (ABD) den Schleifkörper (SKO) überdeckt.

2. Abdeckung (ABD) nach Anspruch 1, **dadurch gekennzeichnet, dass** sie in Richtung des Langträgers (LAN) hochklappbar ist.

3. Abdeckung (ABD) nach Anspruch 1 oder 2, **dadurch gekennzeichnet, dass** sie an einem oberen, dem Langträger (LAN) näher liegendem Ende (OEN) einer Seitenabdeckung (SAB) des Stromabnehmers (STA) drehbar gelagert ist, wobei das obere Ende (OEN) der Seitenabdeckung (SAB) einen unteren Anschlag (UAN) für die Abdeckung (ABD) aufweist.

4. Abdeckung (ABD) nach einem der Ansprüche 2 bis 4, **dadurch gekennzeichnet, dass** sie an ihrem dem Bahnsteig (BAS) näher liegenden Endbereich (BAE) breiter ausgebildet ist als an ihrem an dem Seitenabschnitt (SAB) gelagerten Endbereich (SAE).

5. Abdeckung (ABD) nach einem der Ansprüche 2 bis 5, **dadurch gekennzeichnet, dass** sie abschnittsweise über die dem Schienenfahrzeug abgewandte Seitenfront des Langträgers (LAN) vorragt.

6. Abdeckung nach einem der Ansprüche 1 bis 6, **dadurch gekennzeichnet, dass** sie an ihrem vorderen, seitlichen Endbereichen (VSE) nach oben, in Richtung des Langträgers (LAN) aufgebogen ist.

## Claims

1. Protective apparatus of a rail vehicle, the apparatus comprising a cover (ABD) for the disposed current collector (STA), **characterised in that** in normal operation, when the current collector (STA) is in electrical contact with the conductor rail, the cover (ABD) covers the sliding pickup body (SKO).

2. Cover (ABD) according to claim 1, **characterised in that** it can be folded upwards in the direction of the longitudinal bearer (LAN).

3. Cover (ABD) according to claim 1 or 2, **characterised in that** it is rotatably mounted at an upper end (OEN) of a lateral cover (SAB) of the current collector (STA), which end is located closer to the longitudinal bearer (LAN), wherein the upper end (OEN) of the lateral cover (SAB) has a lower stop (UAN) for the cover (ABD).

4. Cover (ABD) according to one of claims 2 to 4, **characterised in that** it is embodied wider at its end section (BAE) located closer to the platform (BAS) than at its end section (SAE) mounted on the lateral section (SAB).

5. Cover (ABD) according to one of claims 2 to 5, **characterised in that** in sections it projects beyond the lateral front side of the longitudinal bearer (LAN) facing away from the rail vehicle.

6. Cover (ABD) according to one of claims 1 to 6, **characterised in that** at its front lateral end sections (VSE) it is bent upwards in the direction of the longitudinal bearer (LAN).

## Revendications

1. Dispositif de protection d'un véhicule sur rails comprenant une couverture (ABD) de l'appareil de prise de courant (STA) monté, **caractérisé en ce que**, dans le cas de l'exploitation régulière, la couverture (ABD) recouvre le frotteur (SKO) lorsque l'appareil de prise de courant (STA) est en contact électrique avec le rail conducteur.

2. Couverture (ABD) selon la revendication 1, **caractérisée en ce qu'**elle peut être rabattue vers le haut en direction du longeron (LAN).

3. Couverture (ABD) selon la revendication 1 ou 2, **caractérisée en ce qu'**elle est montée de manière rotative sur une extrémité supérieure (OEN), plus proche de longeron (LAN), d'une couverture latérale (SAB) de l'appareil de prise de courant (STA), l'extrémité supérieure (OEN) de la couverture latérale (SAB) présentant une butée inférieure (UAN) pour la couverture (ABD).

4. Couverture (ABD) selon l'une des revendications 2 à 4, **caractérisée en ce qu'**elle est exécutée de manière à être plus large au niveau de sa zone d'extrémité (BAE) plus proche du quai (BAS) qu'au niveau de sa zone d'extrémité (SAE) montée sur la partie latérale (SAB).

5. Couverture (ABD) selon l'une des revendications 2 à 5, **caractérisée en ce qu'**elle fait saillie, par endroits, sur la face latérale du longeron (LAN) éloignée du véhicule sur rails.

6. Couverture selon l'une des revendications 1 à 6, **caractérisée en ce qu'**elle est pliée vers le haut, en direction du longeron (LAN), au niveau de ses zones d'extrémité latérales antérieures (VSE).
